**Europäisches Patentamt**

(19) **European Patent Office** (11) Publication number: **0 001 000**

**Office européen des brevets** **B1**

(12) **EUROPEAN PATENT SPECIFICATION**

(45) Date of publication of patent specification: **09.09.81** (51) Int. Cl.³: **G 02 F 1/01, G 02 B 5/14**

(21) Application number: **78300290.0**

(22) Date of filing: **16.08.78**

(54) **Optical switch.**

(30) Priority: **25.08.77 US 827578**

(43) Date of publication of application:
**07.03.79 Bulletin 79/5**

(45) Publication of the grant of the European patent:
**09.09.81 Bulletin 81/36**

(84) Designated Contracting States:
**BE DE FR GB NL SE**

(56) References cited:
**FR - A - 2 012 437**
**FR - A - 2 294 535**
**GB - A - 1 426 475**
**US - A - 3 470 320**

**IBM TECHNICAL DISCLOSURE BULLETIN, vol.
20, no. 11A, April 1978
NEW YORK (USA)
M. J. BRADY et al.: "Solid State Optical Switch"
Page 4652**

(73) Proprietor: **Western Electric Company,
Incorporated
222 Broadway
New York N.Y. 10038 (US)**

(72) Inventor: **Albanese, Andres
90 Main Street Apartment D4
Matawan New Jersey 07747 (US)**

(74) Representative: **Lawrence, Brian Richard et al,
Western Electric Company Limited 5, Mornington
Road
Woodford Green Essex IG8 OTU (GB)**

## Optical Switch

The present invention relates to an optical switch.

In recent years, the technology of making very thin, highly transparent threads or fibers of glass for carrying light in the infrared, visible, and ultraviolet regions of the spectrum has greatly advanced. At the present time, the use of optical fibers for transmitting communication signals appears both technologically feasible and economically practical. However, a form of optical fiber switching device is needed so that the state of light transmission on optical fibers can be readily ascertained without need of inconvenient physical handling and consequent deterioration of the fibers and their connections. Such a switching device can, for example be incorporated in a fiber testing apparatus. Presently contemplated optical fiber cables can employ a plurality of tape-like layers of parallel optical fibers and it would be advantageous to provide optical fiber switches and/or test points for such cables which additionally have a relatively planar geometry capable of accommodating many parallel optical fibers having a relatively close spacing. The major problem in realizing such an optical switching operation, is to achieve low insertion loss, negligible crosstalk, and high tolerance to multimode light of different wavelengths and polarizations.

In French patent specification No. 2,294,535 there is disclosed an optical switch comprising a dielectric body, an optical member, means for rendering the optical member sensitive to an electrostatic field, electrode means comprising a pair of conductive electrodes disposed adjacent to the optical member and means for coupling electric voltages to the electrode means to generate an electrostatic field for moving the member with respect to the electrode means.

In addition in U.S. patent specification No. 3,470,320 there is disclosed a scanning device including an optical fibre coated with an electrically conductive substance for rendering it sensitive to an electrostatic field.

In accordance with the present invention an optical switch as aforesaid is provided in which the optical member is an optical fibre, the means for rendering said optical fibre sensitive to an electrostatic field is an electrically conductive coating substance on said fibre, and in which the optical fibre is disposed along a channel formed at least in part by said dielectric body, the movement of said fibre being confined by opposed sides of said channel.

In carrying out the invention it may be arranged that means is provided for coupling an electric voltage to said substance for rendering it sensitive to an electro-static field.

Conveniently, it may be arranged that each electrode is disposed adjacent to the edge of the channel whereby the fibre is electrostatically movable in a plane parallel to each electrode, the dielectric covering being located over the channel and each electrode.

Alternatively, it may be arranged that the conductive electrodes are disposed relative to the channel so that the fibre is electrostatically movable in a direction perpendicular to the electrode planes.

Advantageously, insulation means will be provided for insulating the fibre conductive coating from each electrode, the insulation means conveniently including opposite sides of the channel, or a dielectric coating covering the fibre conductive coating.

For a better understanding of the invention, some exemplary embodiments will now be described reference being made to the accompanying drawings, in which:—

FIG. 1 shows an electrostatic optical switch board according to an illustrative embodiment of the present invention in plan view together with a schematic diagram of an accompanying control circuit;

FIG. 2 shows a cross-section of the electrostatic optical switch board of FIG. 1 along line 2—2 thereof;

FIG. 3 shows a view of the opposite or bottom side of the electrostatic optical switch board of FIG. 1;

FIGS. 4, 5 and 6 show alternative cross-sections of the electrostatic optical fibre switch of the invention; and

FIGS. 7 and 8 show partially pictorial, partially schematic diagrams of alternative electrical circuits usable in the inventive electrostatic optical fibre switch when controlled by electrical pulses.

In the following detailed description, an optical switch is described in terms of a planar switch assembly comprising a plurality of optical fibres that are electrostatically switched between two positions. However, the principles and teachings of the present invention are also applicable to an optical switch comprising a single optical fibre that is electrostatically switched between two positions. These two positions may comprise another optical fibre, a light emitting diode, a photodetector or other light transmitting and/or receiving elements. Moreover, the following detailed description, by way of example only, is directed to an optical fibre test station. However, other uses and applications of the inventive electrostatic optical fiber switch are well within the spirit and scope of the present invention.

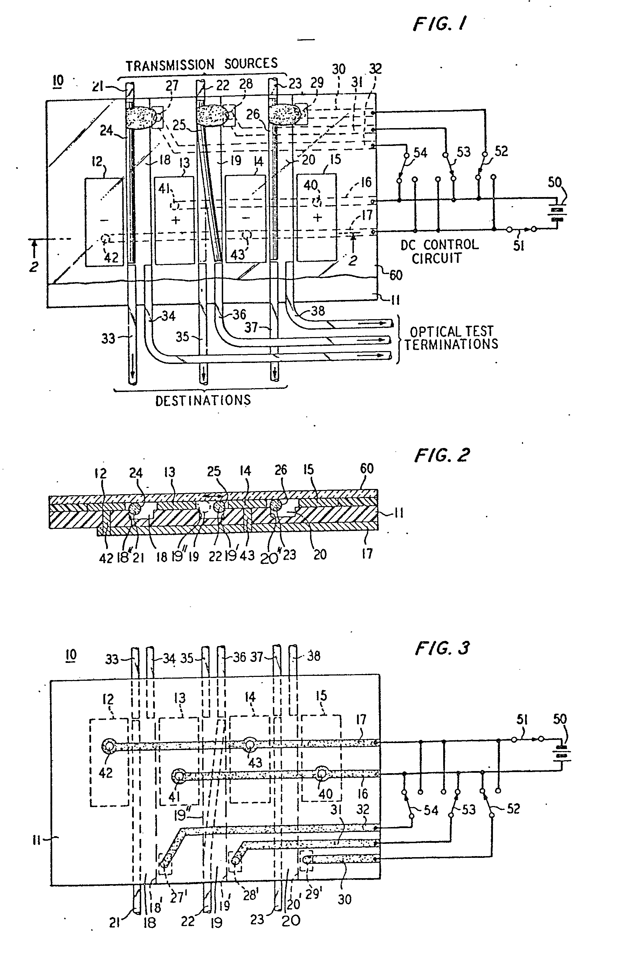

In FIG. 1, a plurality of transmission sources transmit light over an optical fiber cable (not shown) having a plurality of optical fibers 21, 22 and 23 of approximately 100 microns diameter. The fibers, which are, for example, silica fibers with germania doped silica cores, are affixed in corresponding channels 18, 19 and 20 of electrostatic optical switch assembly 10. A control circuit 50 to 54 selectively switches the optical fibers so that light is able to pass to a plurality of second optical fibers 33, 35 and 37 (destinations) or to a plurality of third optical fibers 34, 36 and 38 (optical test terminations). The fibers 21, 22 and 23 have, respectively, electrically conductive coatings 24, 25 and 26 thereon. The fibers are respectively held in the three parallel channels 18, 19 and 20 of a dielectric board 11 by a conductive adhesive paint and side conductors 27, 28 and 29 which permit electrical connection to a set of voltage providing conductors 32, 31 and 30 respectively.

Several electrode strips 12, 13, 14 and 15 are disposed in a common plane between and on either side of the channels 18, 19 and 20. Generally, the number of electrode strips is equal to that of the channels plus one. The electrode strips may be, for example, fabricated by a chemical etching process, or by another known method of fabricating planar conductive strips. A voltage source 50, is electrically connected across every pair of adjacent electrode strips 12—13, 13—14 and 14—15, such that the electrodes bear electric charges of spatially alternating polarity. For this purpose positive bus conductor 16 is connected to electrodes 13 and 15 by means of metallic junctions 41 and 40 respectively; and negative bus conductor 17 is connected to electrodes 12 and 14 by metallic junctions 42 and 43 respectively. Dielectric board 11 having the channels 18, 19 and 20 for holding the fibers is overlaid with and fastened to ·a transparent glass, plastic, or other insulative protective dielectric covering layer 60. Layer 60 advantageously confines fibers 21, 22, 23 and 33—38, permits their protection from dust etc., and permits visual observation, and provides electrical insulation to the electrodes 12—15 for safety and electrode protection as well.

Switches 52, 53 and 54 control the polarity of coatings 26, 25 and 24 of optical fibers 23, 22 and 21 respectively. For example, if it be desired to test optical fiber 22 for presence of optical transmissions, switch 53 selects a connection, as shown, to the positive pole of DC voltage source 50 thereby connecting the positive pole of source 50 via conductor 31 through the silver paint 28 to coating 25. The voltage level required need not exceed approximately 400 volts. Coating 25 acquires a positive charge which is of the same polarity as the charge on electrode 13 and opposite in polarity to the charge on electrode 14. Accordingly, an electrostatic force in the direction of electrode 14 is exerted on coating 25 and fiber 22. In response to the electrostatic force the optical fiber laterally moves in channel 19 toward electode 14, thereby breaking optical connection with optical fiber 35 and making optical connection with optical test fiber 36.

When it is desired to end the optical test and reestablish connection between fiber 22 and destination fiber 35, switch 53 is positioned to connect coating 25 to the negative pole of battery 50. Thus, coating 25 acquires a negative charge which causes it to be repelled from electrode 14 and attracted to electrode 13, resulting in a lateral movement towards electrode 13 and reconnection with optical fiber 35. The repulsion in the early part of the switching operation is at a high level of strength due to the small distance separation between the repelling electrode 14 and the coating 25. The onset of switching is thus rendered certain and sensitive, permitting a relatively low DC voltage can be used. A similar description can be made regarding the operation of switches 54 and 52 and the optical fibers with coatings 24 and 26, respectively. If it is desired to dispense with separate switches 52—54 and test all of the source fibres 21—23 at once, switches 52—54 can readily be replaced by permanent connections to one pole of battery 50 and switch 51 replaced with an ON—OFF—ON double-pole double-throw polarity reversing switch in the lines 16 and 17 to battery 50. It will also be understood that alternative switching devices, such as vacuum tubes or semiconductive devices, are usable instead of mechanical switches 51—54.

FIG. 2 shows a cross-section of the electrostatic optical switch board 10 at a cut through conductor 17 along line 2—2 of FIG. 1. Optical fibers 21, 22 and 23 respectively have metallic coatings 24, 25 and 26. The metallic coatings are, for example, provided by dipping the fibers in a conductive material paint, or by coating them through evaporation and deposition of alumium or other conductive material in a previous manufacturing operation, or by another method. The fibers so coated are laterally movable in channels 18, 19 and 20 of dielectric board 11 as shown by the directional arrow in FIG. 2.

Board 11 is, for example, made of phenol or ceramic material. The channels in board 11 are suitably fabricated by means of sawing, casting or laser scribing, and the opposite sides of the channels form dielectric stops, such as 18', 18", 19', 19", 20' and 20", for the coated optical fibers. The board 11 is suitably provided in an initial stage of manufacture with coatings of a conductive film like gold or copper on both its top and bottom major surfaces. Conductive patterns in the film for the conductors and electrodes are etched, for example, by standard printed circuit techniques to form the conductive areas 30, 31, 32, 12, 13, 14, 15, 16 and 17. The fabrication of grooves or channels 18, 19 and 20 can occur either prior to or subsequent to the etching process. Then holes are drilled, and soldering or other metallic connection is performed so as to form junctions 40 and 41 between conductor 16 and electrodes 13 and 15, respectively. Similarly, junctions 42 and 43 are formed between conductor 17 and electrodes 12 and 14, respectively. A cross-section of junctions 42 and 43 is shown in FIG. 2.

The optical fibers 21, 22 and 23 are suitably located as shown in FIG. 1, and fibers 33 to 38 are affixed to the grooves 18 to 20. The movable fibers 21 through 23 are held by drops 27 through 29 of silver-loaded paint, aluminum paint or other commercially available electrically conductive adhesive. The cured drops simultaneously act as mechanical pivot points and electrical connections. They penetrate through holes in dielectric plate 11 so as to make contact respectively with conductors 32, 31 and 30.

FIG. 3 shows the bottom of optical switch board 10. Conductors 30, 31, 32, 16 and 17 are clearly shown on the bottom surface beneath the channels and opposite the major surface to which the electrodes 12—15 are attached. Insulation, not shown, like layer 60 may also be provided to protect the bottom surface conductors. The conductors couple and provide electrical voltages to the appropriate points as previously described in connection with FIG. 1 with the result that lateral movement of the conductively coated optical fibers can be electrostatically accomplished. In all respects the drawing of FIG. 3 corresponds to the views of FIG. 1 and FIG. 2 so that further discussion thereof is believed to be unnecessary.

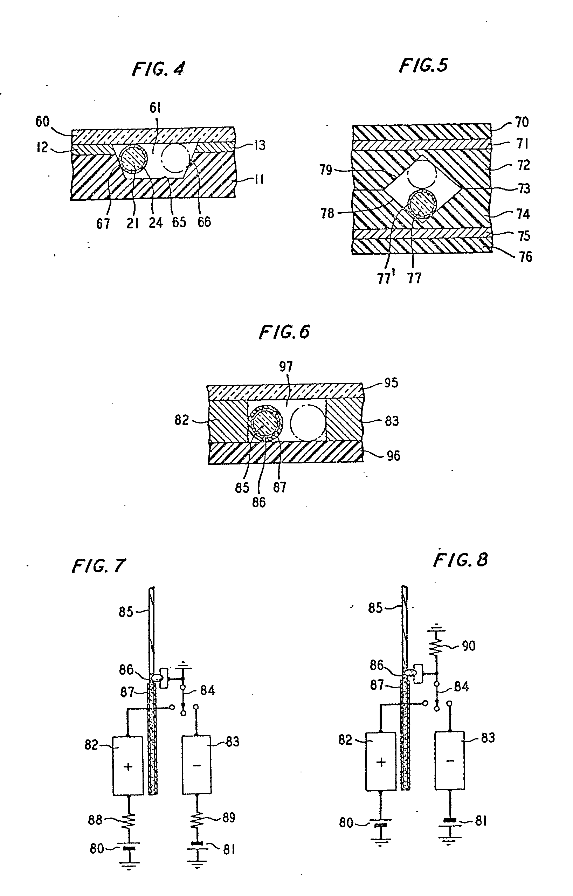

FIG. 4 shows in an other embodiment a cross-section of board 11 which has been scribed or sawed directly through a top layer of conductor so as to form conductor segments 12 and 13 and a rectangular or trapezoidal fiber channel 61 having base 65 and straight or inclined sides or walls 66 and 67. Glass sheet 60 encloses fiber 21, which has a metallic coating 24, in the channel 61 which is filled with dielectric liquid. The dielectric liquid increases the electrostatic force thereby permitting lower electrode voltage, decreases the optical insertion loss between the movable fiber and the termination fiber switched to, increases the DC breakdown voltage of the switch (eliminating sparking), and damps the motion of and lubricates the movable fiber thereby reducing abrasion thereof.

When fiber 21 is attracted to electrode 12, as shown, the wall 67 prevents metallic coating 24 from disadvantageous short-circuit contact with electrode 12. Similarly, when fiber 21 is attracted to electrode 13, as shown in phantom technique, the same function is provided by wall 66. The electrostatic force is generally sufficient to draw coated fiber 21 laterally upward so that the fiber is restrained by side 66 or 67 and glass 60. In both cases the opposite sides 66 and 67 are providing a dielectric stop which may involve glass sheet 60 as well.

In another illustrative embodiment of the optical switch, a ceramic board 11 having approxmately a $25\mu$ gold coating was sawed to form two channels of rectangular cross-section approximately 0.5 mm wide by 0.25 mm deep. Two 0.2 mm diameter optical fibers with 0.1 mm graded index cores and numerical aperture 0.36 having 1 micron thick evaporated chromium coatings were electrostatically movable laterally in the channels. One of the channels was selected for additional observations. With as little as 250 volts supply voltage applied across the halves of the gold coating resulting from the sawing operation for the channel, the fiber in this channel readily was switched. The channel was filled with an index matching immersion liquid of refractive index 1.505. A gallium aluminum arsenide (GaAlAs) light emitting diode at 0.85 microns wavelength was coupled to the movable coated fiber in the selected channel. Two termination fibers were affixed in the channel with a soft sticky wax by means of a micromanipulator while a microscope was used for observing correct placement of the fibers. Then the fibers were permanently affixed in the channel. The termination fibers were brought out to an infrared viewer. Transmitted light was readily observed through the viewer in the termination fibers alternately as the movable fiber was switched, and the observed extinction was essentially complete.

Some abrasion of the thin chromium coating of the fiber in the unselected channel was noted after a number of trials as evidenced by an increased supply voltage being required to switch that fiber, however. This behavior appears to be capable of improvement by increasing the coating thickness or by improving the adhesion of the metal coating to the glass fiber, or both. The abrasion effect may be preventable by providing an additional tougher outer coating (not shown in FIG. 4) made by dipping the metal-coated fiber in a commercially available cement diluted 100 : 1 by volume in a suitable solvent.

FIG. 5 shows a cross-section of an optical fiber switch board illustrating another embodiment. The switch board of FIG. 5 is actually a composite of two circuit boards, the first having metallic sheet 71 coated with dielectric layers 70 and 72, and the second having metallic sheet 75 coated with dielectric layers 76 and 74. An optical fiber 77 having metallic coating 77' is enclosed in grooves or channel sides 78 and 79, and the circuit boards are brought together at plane 73 so as to form a diamond-shaped channel for holding fiber 77 and termination fibers not shown. Fiber 77 can be attracted selectively toward metallic layer 71 or 75 by means of circuit connections like those hereinbefore described. Fiber 77 moves in a plant perpendicular to the parallel planes of the electrodes 71 and 75, unlike the other suggested embodiments in which the fiber motion is parallel to a single electric plane. Dielectric layers 72 and 74 act as dielectric stops for preventing short circuits and utilize V-shaped grooves 78 and 79 for precision optical fiber location for advantageous optical coupling. A considerable number of independently switchable fiber switches may be located laterally along plane 73 with only the two electrodes 71 and 75 serving all of them.

FIG. 6 shows a cross-section of a further embodiment of the invention. Insulating board 96 has conductive electrode strips 82 and 83 and clear plastic 95 enclosing a rectangular space 97 therein. Optical fiber 85, having conductive coating 86, is provided with an additional dielectric coating 87 and is located within the enclosed switching space 97. The electrical polarity of conductive layer 86 is set so as to move the fiber 85 against either electrode 82 or 83. Dielectric coating 87 illustratively is formed by dipping the fiber in a commercially available cement appropriately diluted with as much as 100 parts of methyl ethyl ketone for appropriate thinness. Coating 87 acts as a dielectric stop member and short-circuit prevention layer by preventing electrical contact of the conductive coating 86 and the electrodes 82 and 83. In addition, this coating increases the capacitance C of the switch, thereby reducing the electrode voltage V required to place the same charge on the elements of the switch according to the formula $q = CV$ and thus produce the same electrostatic forces.

FIGS. 7 and 8 schematically show two alternative electrical circuits utilizing the embodiment of FIG. 6 by means of which mere pulses of energy suffice to accomplish the switching action. Similar electrical circuits may be used with the embodiments of FIGS. 1—5 as well.

In FIG. 7, fiber 85 is provided with conductive coating 86, which is connected to ground, and with dielectric coating 87 as previously described. Electrodes 82 and 83 are selectably switchable to ground by ON—OFF—ON switch 84, but when switch 84 is in its center—OFF position, electrodes 82 and 83 bear positive and negative voltages respectively due to their connections to batteries 80 and 81 through resistors 88 and 89. In FIG. 8, the construction is the same as in FIG. 7 with the exception that the resistors 88 and 89 are eliminated and replaced with resistor 90 from ground to the conductive coating 86 and switch 84. In both cases, the batteries operate as a dual-polarity voltage source connected intermediately to coating 86 via a direct connection or a resistance as the respective case may be.

The principle of operation of the embodiments of both FIG. 7 and FIG. 8 may be readily understood from the following description. When switch 84 is set to connect electrode 83 to coating 86, both electrode 83 and coating 86 bear a polarity opposite to that of electrode 82. Accordingly, fiber 85 is attracted in the direction of electrode 82 and repelled from electrode 83. The electrical connection just mentioned need only be momentary since subsequent connection of switch 84 to the center—OFF position as shown leaves coating 86 connected to ground so that coating 86 still is electrostatically attracted to electrode 82.

If switch 84 is set so that electrode 82 is connected to coating 86, there will then arise an electrostatic repulsion between electrode 82 and coating 86, and an attraction and movement of fiber 85 to electrode 83. Again, such a switch setting need only be momentary since a resetting of switch 84 to the center—OFF position will hold fiber 85 near electrode 83. This "memory" phenomenon occurs because once the fiber is near an electrode, its attraction to that electrode exceeds its attraction to the adjacent electrode in the center—OFF switch condition. Thus, a mere pulse of electricity due to momentary setting of switch 84 to one of its extreme positions suffices to switch fiber 85. An optical switch with memory is completed by providing additional optical fibers like fibers 33 and 34 of FIG. 1 near the end of fiber 85, the additional fibers not being shown in FIGS. 7 and 8 for clarity.

The embodiments of the invention provide switches having considerable advantages over previously proposed switches. The embodiment switches have a substantially flat configuration, they are simple to construct and are extremely compact. This latter advantage enables the switch to be located in a confined location as is desirable and important in optical fiber systems.

There are clearly several alternative ways in which the electrostatic fields can be established to move the fibers. Electrostatic fields have the advantage that neigbouring fields would not interfere with one another as would happen if other forms of motivation were to be employed. Furthermore electrostatic forces are easier to establish and easier to control than other forces, and concentrated fields can be established with very low current.

**Claims**

1. An optical switch comprising a dielectric body (11), an optical member (21), means for rendering the optical member (21) sensitive to an electrostatic field, electrode means (12,13) comprising a pair of conductive electrodes (12, 13) disposed adjacent to the optical member (21) and means (16, 17) for coupling electric voltages to the electrode means (12, 13) to generate an electrostatic field for moving the member (21) with respect to the electrode means (12, 13) characterised in that the optical member (21) is an optical fibre (21), the means for rendering said optical fibre (21) sensitive to an electrostatic field is an electrically conductive coating substance (24) on said fibre (21), and in that the optical fibre (21) is disposed along a channel (18; 61; 97) formed at least in part by said dielectric body (11), the movement of said fibre (21) being confined by opposed sides of said channel (18; 61; 97).

2. An optical switch according to claim 1, in which means is provided for coupling an electric voltage to said substance for rendering it sensitive to an electrostatic field.

3. An optical switch according to claim 1 or claim 2, in which each electrode (12, 13; 82, 83) is disposed adjacent to the edge of the channel (18; 61; 97) whereby the fibre is electrostatically movable in a plane parallel to each electrode, and in that a dielectric covering (60; 95) is located over the channel (18; 61; 97) and each electrode.

4. An optical switch according to claim 1 or claim 2, in which the conductive electrodes (71, 75) are disposed relative to the channel so that the fibre (77) is electrostatically movable in a direction perpendicular to the electrode planes.

5. An optical switch according to any of claims 2 to 4 in which insulation means (18', 18'', 87) is provided for insulating the fibre conductive coating (24; 77'; 86) from each electrode.

6. An optical switch according to claim 5, in which the insulation means includes opposite sides (18', 18'', 66, 67; 78, 79) of the channel (18; 61).

7. An optical switch according to claim 5, in which the insulation means includes a dielectric coating (87) covering the fibre conductive coating (86).

## Revendications

1. Un commutateur optique comprenant un corps diélectrique (11), un élément optique (21), des moyens pour rendre l'élément optique sensible à un champ électrostatique, des moyens d'électrodes (12, 13) comportant une paire d'électrodes conductrices (12, 13) disposées adjacentes à l'élément optique (21) et des moyens (16, 17) pour appliquer des tensions électriques aux moyens d'électrodes (12, 13) de manière à créer un champ électrostatique pour déplacer l'élément optique (21) par rapport aux électrodes (12, 13), caractérisé en ce que l'élément optique (21) est une fibre optique (21), en ce que les moyens pour rendre ladite fibre optique (21) sensible à un champ électrostatique sont une substance de revêtement électriquement conductrice (24) sur ladite fibre (21), et en ce que la fibre optique (21) est disposée dans un canal (18; 61; 97) réalisé, au moins en partie, par ledit corps diélectrique (11), le déplacement de ladite fibre (21) étant limité par les côtés opposés dudit canal (18; 61; 97).

2. Un commutateur optique selon la revendication 1, dans lequel des moyens sont prévus pour appliquer une tension électrique à ladite substance pout la rendre sensible à un champ électrostatique.

3. Un commutateur optique selon la revendication 1 ou la revendication 2, dans lequel chaque électrode (12, 13; 82, 83) est disposée adjacente au bord du canal (18; 61; 97) de manière que la fibre soit électro-statiquement déplaçable dans un plan parallèle à chaque électrode et un revêtement diélectrique (60; 95) est disposé au-dessus du canal (18; 61; 97) et de chaque électrode.

4. Un commutateur optique selon la revendication 1 ou la revedication 2, dans lequel les électrodes conductrices (71, 75) sont disposées par rapport au canal de telle manière que la fibre (77) est électrostatiquement déplaçable dans une direction perpendiculaire aux plans des électrodes.

5. Un commutateur optique selon l'une quelconque des revendications 2 à 4, dans lequel des moyens d'isolation (18', 18'', 87) sont prévus pour isoler le revêtement conducteur de la fibre (24; 77'; 86) par rapport à chaque électrode.

6. Un commutateur optique selon la revendication 5, dans lequel les moyens d'isolation comprennent des côtés opposés (18', 18''; 66, 67; 78, 73) du canal (18; 61).

7. Un commutateur optique selon la revendiction 5, dans lequel les moyens d'isolation comprennent un revêtement diélectrique (87) couvrant le revêtement conducteur de la fibre (86).

## Patentansprüche

1. Optischer Schalter mit
—einem dielektrischen Körper (11),
—ein optischen Glied (21),
—Mitteln zum Empfindlichmachen des optischen Glieds (21) gegenüber einem elektrostatischen Feld,
—Elektrodenmittel (12, 13) mit einem Paar leitender Elektroden (12, 13), die benachbart dem optischen Glied (21) angeordnet sind, und
—Mittel (16, 17) zum Ankoppeln elektrischer Spannungen an die Elektrodenmittel (12, 13), um ein elektrostatisches Feld zur Bewegung des Gliedes (21) bezüglich der Elektrodenmittel (12, 13) zu erzeugen,
dadurch gekennzeichnet, daß
—das optische Glied (2) eine optische Faser (21) ist,
—die Mittel zum Empfindlichmachen der optischen Faser (21) gegenüber einem elektrostatischen Feld eine elektrisch leitende Beschichtungssubstanze (24) auf der Faser (21) ist und
—die optische Faser (21) längs eines Kanals (18; 61; 97) angeordnet ist, der wenigstens teilweise durch den dielektrischen Körper (11) gebildet ist.

—wobei die Bewegung der Faser (21) durch gegenüberliegende Seiten des Kanals (18; 61; 97) begrenzt ist.

2. Optischer Schalter nach Anspruch 1, bei dem
—ein Mittel zum Ankoppeln einer elektrischen Spannung an die Substanz vorgesehen ist, um diese gegenüber einem elektrostatischen Feld empfindlich zu machen.

3. Optischer Schalter nach Anspruch 1 oder 2, bei dem
—jede Eletrode (12, 13; 82, 83) benachbart der Kante des Kanals (18; 61; 97) angeordnet ist, wodurch die Faser elektrostatisch in einer Ebene parallel zu jeder Elektrode bewegbar ist, und
—ein dielektrischer Belag (60; 95) auf dem Kanal (18; 61; 97) und jeder Elektrode angeordnet ist.

4. Optischer Schalter nach Anspruch 1 oder 2, bei dem

—die leitenden Elektroden (71, 75) bezüglich des Kanals so angeordnet sind, daß die Faser (77) in einer Richtung senkrecht zu dem Elektrodenebenen elektrostatisch bewegbar ist.

5. Optischer Schalter nach einem der Ansprüche 2 bis 4, bei dem
—ein Isolationsmittel (18', 18", 87) zum Isolieren der leitenden Faserbeschichtung (24; 77'; 86) gegenüber jeder Elektrode vorgesehen ist.

6. Optischer Schalter nach Anspruch 5, bei dem
—das Isolations mittel gegenüberliegende Seiten (18', 18"; 66, 67; 78, 79) des Kanals (18; 61) einschließt.

7. Optischer Schalter nach Anspruch 5, bei dem
—das Isolationsmittel eine dielektrische Beschichtung (87), das die leitende Faserbeschichtung (86) bedeckt, einschließt.

FIG. 1

TRANSMISSION SOURCES

DC CONTROL CIRCUIT

OPTICAL TEST TERMINATIONS

DESTINATIONS

FIG. 2

FIG. 3

FIG. 4

FIG. 5

FIG. 6

FIG. 7

FIG. 8